# EUROPÄISCHE PATENTSCHRIFT

(11) **EP 4 004 656 B1**
(45) Veröffentlichungstag und Bekanntmachung des Hinweises auf die Patenterteilung: **19.06.2024**
(21) Anmeldenummer: 20739959.3
(22) Anmeldetag: 10.07.2020
(51) Int. Cl.: G05B 19/042

(54) **VERFAHREN ZUM BETREIBEN EINES FELDGERÄTES DER PROZESSAUTOMATISIERUNGSTECHNIK**
METHOD FOR OPERATING A FIELD DEVICE OF PROCESS AUTOMATION TECHNOLOGY
PROCEDE DE FONCTIONNEMENT D'UN APPAREIL DE TERRAIN DE LA TECHNOLOGIE D'AUTOMATISATION DES PROCESSUS

(30) Priorität: 25.07.2019 DE 102019120199
(43) Veröffentlichungstag der Anmeldung: 01.06.2022
(73) Patentinhaber: Endress + Hauser Flowtec AG, 4153 Reinach (CH)
(72) Erfinder: TSCHUDIN, Beat, 4153 Reinach (CH); BIER, Thomas, 4125 Riehen (CH); WEISS, Steffen, 79639 Grenzach-Wyhlen (DE); WORRETH, Bruno, 68480 Kiffis (FR)
(74) Vertreter: Hahn, Christian
(86) Internationale Anmeldenummer: PCT/EP2020/069525
(87) Internationale Veröffentlichungsnummer: WO 2021/013580

(56) Entgegenhaltungen:
- EP-A2- 0 853 288
- DE-A1-102017 109 030
- US-A1- 2009 128 392

## Beschreibung

In der Automatisierungstechnik, insbesondere in der Prozessautomatisierungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotentialmessgeräten, Leitfähigkeitsmessgeräten, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Messkomponenten verstanden, die auf der Feldebene angeordnet sind.

Ein Feldgerät ist dabei insbesondere ausgewählt aus einer Gruppe bestehend aus Durchflussmessgeräten, Füllstandsmessgeräten, Druckmessgeräten, Temperaturmessgeräten, Grenzstandsmessgeräten und/oder Analysemessgeräten.

Durchflussmessgeräte sind insbesondere Coriolis-, Ultraschall-, Vortex-, thermische und/oder magnetisch induktive Durchflussmessgeräte.

Füllstandsmessgeräte sind insbesondere Mikrowellen-Füllstandsmessgeräte, Ultraschall-Füllstandsmessgeräte, zeitbereichsreflektometrische Füllstandsmessgeräte, radiometrische Füllstandsmessgeräte, kapazitive Füllstandsmessgeräte, induktive Füllstandsmessgeräte und/oder temperatursensitive Füllstandsmessgeräte.

Druckmessgeräte sind insbesondere Absolut-,Relativ- oder Differenzdruckmessgeräte.

Temperaturmessgeräte sind insbesondere Messgeräte mit Thermoelementen und/oder temperaturabhängigen Widerständen.

Grenzstandsmessgeräte sind insbesondere vibronische Grenzstandsmessgeräte, Ultraschall-Grenzstandsmessgeräte und/oder kapazitive Grenzstandsmessgeräte.

Analysemessgeräte sind insbesondere pH-Sensoren, Leitfähigkeitssensoren, Sauerstoff- und Aktivsauerstoffsensoren, (spektro)-photometrische Sensoren, und/oder ionenselektive Elektroden.

In der EP 1 647 869 A2 wird ein Automatisierungssystem gelehrt, das einen RFID-Tag mit einem Speicher aufweist, in dem Identifikations- und Betriebsdaten hinterlegt sind. Das Auslesen der Daten erfolgt in dem Fall mittels einer RFID Lese- und Schreibeinheit, die in einer tragbaren Computereinheit oder einem Head Mounted Display integriert ist.

Des Weiteren sind Applikationssoftwares für Smartphones bekannt, mit derer man Feldgeräte bedienen kann, so zum Beispiel aus der DE 10 2016 124 739 A1. Diese lösen aufgrund ihrer einfacheren Handhabung immer mehr herkömmliche Bedienprogramme ab. Bisher muss der Servicetechniker jedoch die Applikationssoftware im Smartphone starten und dort die Verbindungen mit den im unmittelbaren Umkreis gefundenen oder den bereits eingerichteten Feldgeräten durch Auswahl des zu bedienenden Feldgerätes aufbauen.

Die DE 10 2017 109 030 A1 offenbart ein Verfahren zum Betrieben eines in einer Anlage der Automatisierungstechnik eingesetzten Feldgerätes, welches mittels einer mittels eines ersten drahtgebunden oder drahtlos ausgestalteten Kommunikationsnetzwerks mit einem Edge Device in Kommunikationsverbindung steht. Durch Aufrufen einer Verknüpfung des Feldgerätes auf einem Client-Rechner wird ein dem Feldgerät zugeordneter Gerätetreiber geöffnet. Die Verknüpfung kann mittels des Client-Rechners aus einem QR-Code oder aus einem NFC-Tag ausgelesen werden.

Die US 2009/0128392 A1 offenbart ein Verfahren zum Verbinden einer Fernbedienung mit einem Fernsehreceiver über NFC. Dabei erfolgt ein Austausch der Verschlüsselung bei einmaligem Kontakt, so dass fortan eine verschlüsselte Kommunikation möglich ist.

Der Erfindung liegt die Aufgabe zugrunde die Bedienung von Feldgeräten mit der Bedieneinheit zu vereinfachen.

Die Aufgabe wird gelöst durch das Verfahren nach Anspruch 1.

Das erfindungsgemäße Verfahren zum Bedienen eines Feldgerätes der Prozessautomatisierungstechnik,
wobei das Feldgerät einen NFC/RFID-Transponder aufweist,
wobei eine Bedieneinheit ein Betriebssystem umfasst, welches ein ausführbares Bedienprogramm aufweist,
wobei die Bedieneinheit eine NFC/RFID-Leseeinheit aufweist,
wobei der NFC/RFID-Transponder einen Speicher umfasst, der Daten aufweist, welche bei einem Auslesen mit der NFC/RFID-Leseeinheit und Interpretieren durch das Betriebssystem ein Aufrufen des Bedienprogrammes in der Bedieneinheit triggern, das Feldgerät eine erste Kommunikationsschnittstelle zur Verbindung des Feldgerätes mit einem drahtlosen Kommunikationsnetzwerk aufweist,
wobei die Bedieneinheit eine zweite Kommunikationsschnittstelle zur Verbindung der Bedieneinheit mit einem drahtlosen Kommunikationsnetzwerk aufweist, welches für das Bedienprogramm zugreifbar ist,
wobei die Daten eine drahtlos Verbindung zwischen dem Feldgerät und der Bedieneinheit über das Bedienprogramm triggern,
wobei für die drahtlose Verbindung zwischen dem Feldgerät und der Bedieneinheit und für eine Autorisierung auf dem Feldgerät Anmeldedaten notwendig sind,
wobei die Anmeldedaten im NFC/RFID-Transponder hinterlegt sind und mit der NFC/RFID-Leseeinheit ausgelesen werden,
wobei nach jeder Verbindung neue Anmeldedaten durch das Bedienprogramm erstellt werden,
wobei die neuen Anmeldedaten dem NFC/RFID-Transponder mittels einer NFC/RFID-Schreibeinheit übermittelt werden,
wobei die im Speicher bereits hinterlegten Anmeldedaten durch die neuen Anmeldedaten ersetzt werden.

Bisher musste der Bediener das Bedienprogramm auf der Bedieneinheit suchen und ausführen um es zu starten. Prozessanlagen weisen jedoch häufig eine Vielzahl an unterschiedlichen Feldgeräten unterschiedlicher Hersteller auf, für die jeweils ein eigenes Bedienprogramm existiert. Die vorliegende Erfindung erlaubt es, dass das Feldgerät ein Aufrufen bzw. Starten des Bedienprogrammes auf der Bedieneinheit triggert bzw. initiiert. Somit öffnet sich das zum Feldgerät kompatible Bedienprogramm bereits, wenn sich die Bedieneinheit in ausreichender Entfernung zum Feldgerät befindet. Dem Benutzer bleibt ein umständliches Suchen des Bedienprogrammes in einer Liste der Bedieneinheit erspart.

Bisher musste der Bediener das Bedienprogramm auf der Bedieneinheit starten und mittels dem Bedienprogramm nach Feldgeräten in der Umgebung suchen, mit denen er sich anmelden kann. Aus der Liste gefundener Feldgeräte wählte er das Feldgerät aus, auf welches er Zugriff haben möchte. Die Auswahl des Feldgerätes führte ihn direkt zur Hauptseite des Feldgerätes oder zum Anmeldefenster des Feldgerätes.

Es ist vorteilhaft, wenn durch das Auslesen der im Feldgerät hinterlegten Daten nicht nur das Bedienprogramm geöffnet, sondern auch eine Verbindung zwischen Bedieneinheit und Feldgerät automatisch hergestellt und die dem Feldgerät zugeordnete Hauptseite bzw. das dem Feldgerät zugeordnete Anmeldefenster in der Bedieneinheit geöffnet wird. Somit erspart sich der Bediener ein umständliches Durchsuchen der im Kommunikationsnetzwerk existierenden Feldgeräte.

Um ein Feldgerät bedienen zu können wird oft eine Autorisierung mittels Anmeldedaten benötigt, um somit unrechtmäßigen Zugriff zu verhindern. Der Benutzer kann sich mit den ihm bekannten Anmeldedaten vor Ort oder auch über die drahtlose Verbindung am Feldgerät unter Angabe ebendieser anmelden. Es gibt Anwendungen, bei denen Feldgeräte in Einsatzbereichen (z.B. Explosionsgefährdete Bereiche) installiert sind, wo ausschließlich ein autorisierter Zugang möglich ist. Da bereits eine Autorisierung erfolgt ist, ist es besonders vorteilhaft, wenn für die Bedienung des Feldgerätes mittels der Bedieneinheit auf eine weitere Autorisierung verzichtet wird. Gleichzeitig soll aber für Bedieneinheiten im drahtlosen Kommunikationsnetzwerk, die außerhalb des Einsatzbereiches sind und für deren Bediener eine Autorisierung noch nicht erfolgt ist eine Autorisierung über das Bedienprogramm erfolgen. In dem Fall ist es besonders vorteilhaft, wenn die Anmeldedaten im Speicher des Feldgerätes hinterlegt sind. Diese können dann mittels der NFC/RFID-Leseeinheit ausgelesen und im Bedienprogramm zur Anmeldung mit dem Feldgerät berücksichtigt werden. Der Benutzer spart sich somit einen weiteren Autorisierungsschritt.

Für den obigen Anwendungsbereich ist es vorteilhaft, wenn die hinterlegten Anmeldedaten nach dem Einlesen durch neu generierte Anmeldedaten ersetzt werden. Dadurch wird verhindert, dass der Benutzer im nachhinein außerhalb des Einsatzbereiches erneut Zugriff auf das Feldgerät erhält, ohne vorher die Autorisierung für den Einsatzbereich durchlaufen zu haben.

Weitere vorteilhafte Ausgestaltungen sind Teil der Unteransprüche.

Eine Ausgestaltung sieht vor, dass die Anmeldedaten eine erste Verschlüsselung aufweisen,
wobei die Anmeldedaten mittels des Bedienprogrammes entschlüsselt werden.

Dafür muss in dem Bedienprogramm ein Schlüssel hinterlegt sein. Dieser kann beispielsweise nur für Benutzer mit speziellen Aufgaben (z.B. der Techniker der eine Wartung durchführt) zur Verfügung stehen.

Eine Ausgestaltung sieht vor, dass die Anmeldedaten mittels des Bedienprogrammes verschlüsselt werden, so dass die verschlüsselten Anmeldedaten eine zweite Verschlüsselung aufweist, die die erste Verschlüsselung ersetzt,
wobei die Anmeldedaten mit der zweiten Verschlüsselung dem NFC/RFID-Transponder mittels einer NFC/RFID-Schreibeinheit übermittelt und dort hinterlegt werden.

Eine Ausgestaltung sieht vor, dass die Daten im Falle einer deaktivierten zweiten Kommunikationsschnittstelle, ein Aktivieren der zweiten Kommunikationsschnittstelle über das Betriebssystem triggert.

Bisher muss der Bediener des Feldgeräte sicherstellen, dass die Kommunikationsschnittstelle der Bedieneinheit eingeschaltet ist, bevor er eine drahtlose Verbindung mit dem Feldgerät aufbauen kann. Es ist vorteilhaft, wenn die hinterlegten und ausgelesenen Daten ein Aktivieren der zweiten Kommunikationsschnittstelle in der Bedieneinheit triggert.

Eine Ausgestaltung sieht vor, dass die Daten im Falle einer deaktivierten ersten Kommunikationsschnittstelle im Feldgerät, ein Aktivieren der ersten Kommunikationsschnittstelle über das Betriebssystem des Feldgerätes triggert.

Bisher muss der Bediener des Feldgeräte sicherstellen, dass die Kommunikationsschnittstelle des Feldgerätes eingeschaltet ist, bevor er eine drahtlose Verbindung mit dem Feldgerät aufbauen kann. Das ist aber nicht immer der Fall, insbesondere nicht dann wenn das Feldgerät batteriebetrieben ist und/oder sich im Energiesparmodus befinden Es ist vorteilhaft, wenn durch das Auslesen der Daten mit der Bedieneinheit ein Aktivieren der Kommunikationsschnittstelle des Feldgerätes getriggert wird.

Neben den übergeordneten Einheiten werden zur Bedienung der Feldgeräte häufig Bedieneinheiten eingesetzt. Diese Bedieneinheiten sind entweder Laptops oder mobile Bedieneinheiten und werden zur Kommunikation mit den Feldgeräten mit dem Feldbusnetzwerk verbunden. Ein Beispiel für ein solches mobiles Gerät ist der "Field Xpert", welcher von der Anmelderin produziert und vertrieben wird. Bedienprogramme bieten dem Bediener eine übersichtliche Oberfläche, mit der nicht nur Prozessdaten und/oder Diagnosedaten ausgelesen werden, sondern auch Änderungen an den Systemparametern oder ein Update des Feldgerätes vorgenommen werden können.

Zur Bedienung der Feldgeräte sind entsprechende Bedienprogramme notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Das Bedienprogramm muss aber nicht zwingend im Speicher der Bedieneinheit hinterlegt sein, sondern kann, insbesondere bei internetfähigen Bedieneinheiten auch über einen Webbrowser gestartet werden.

Die aktuellen Trends aus der Mobiltelefon und Smartphone Branche greifen ebenfalls auf den Feldgerätemarkt über. So bieten heutzutage bereits mehrere Hersteller von Feldgeräten spezielle Programme, sogenannte Applikationssoftware, kurz Apps, für Smartphones und anderen mobilen Endgeräten wie Tablets und Uhren an, welche ein Bedienen von Feldgeräten mittels eines solchen Smartphones über die obig aufgeführte Funkschnittstelle eines Feldgeräts ermöglicht. Diese Applikationssoftwares bieten häufig den Vorteil, dass sie im Gegensatz zu den herkömmlichen Bedienmethoden intuitiv verständlich sind und einem Anwender erlauben, die meisten Basisbedienungen und/oder Wartungsfunktionen eines Feldgeräts auf einfache Art und Weise vorzunehmen. Ein Beispiel für eine Applikationssoftware ist "SmartBlue", welche dem Kunden von der Anmelderin zur Verfügung gestellt wird und mit welcher der Kunde sich über das Smartphone mit dem Feldgerät verbinden kann, um feldgerätespezifische Kenndaten oder Messdaten auszulesen.

Feldgeräte sind häufig mit zusätzlichen Kommunikationsschnittstellen ausgestattet, über welche die Feldgeräte mittels eines zusätzlichen, von dem Feldbusnetzwerk unabhängigen, Kommunikationskanals per Bedieneinheit bedient werden können. Häufig handelt es sich hierbei um spezielle Serviceschnittstellen, beispielsweise die von in Feldgeräten der Anmelderin implementierte CDI-Schnittstelle oder um USB-Schnittstellen. Neben solchen kabelgebundenen Verbindungsmöglichkeiten steigt mittlerweile die Anzahl der auf dem Markt verfügbaren Feldgeräte, welche für die Bedienzwecke eine Funkschnittstelle aufweisen. Häufig ist diese Funkschnittstelle als Bluetooth-, Zigbee-, WirelessHART oder WLAN- Funkschnittstelle ausgestaltet.

Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Das Bedienprogramm, insbesondere die Applikationssoftware hat Zugriff auf Schnittstellen der Bedieneinheit, insbesondere auf hardwareseitige Kommunikationsschnittstellen, um eine Verbindung mit dem Feldgerät herzustellen.

Es handelt sich bei dem Betriebssystem der Bedieneinheit um Microsoft Windows oder um ein Betriebssystem eines mobilen Endgeräts, insbesondere um iOS oder um Android. Neben iOS und Android sind dem Fachmann natürlich eine Vielzahl weiterer Betriebssysteme von Smartphones bekannt, beispielsweise Windows Phone/Mobile und Linux basierte Systeme.

Gemäß Terminologie der geltenden Norm des internationalen Technologiestandards ISO/IEC 2382-1 für Informationstechnik (seit 1993) sind Daten - Data: "a reinterpretable representation of information in a formalized manner, suitable for communication, interpretation, or processing" - eine wieder interpretierbare Darstellung von Information in formalisierter Art, geeignet zur Kommunikation, Interpretation oder Verarbeitung.

In der Informatik und Datenverarbeitung versteht man Daten gemeinhin als (maschinen-) lesbare und -bearbeitbare, in der Regel digitale Repräsentation von Information. Ihr Inhalt wird dazu meist zunächst in Zeichen bzw. Zeichenketten kodiert, deren Aufbau strengen Regeln folgt, der sogenannten Syntax. Um aus Daten wieder die Informationen zu abstrahieren, müssen sie in einem Bedeutungskontext interpretiert werden.

Die Information der Daten wird im Kontext des Betriebssystems interpretiert und gegebenenfalls ausgeführt. Das Ausführen von Informationen triggert im Betriebssystem Aktionen, wie zum Beispiel das Aktivieren einer Kommunikationsschnittstellen oder das Starten eines Bedienprogrammes bzw. einer Applikationssoftware.

NFC steht für Near Field Communication und ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s.

Die Übertragung erfolgt entweder verbindungslos (mit passiven HF- RFID-Transpondern nach ISO/IEC 14443 oder ISO/IEC 15693) oder verbindungsbehaftet (zwischen gleichwertigen aktiven Transmittern).

RFID bezeichnet eine Technologie für Sender-Empfänger-Systeme zum automatischen und berührungslosen Identifizieren und Lokalisieren von Objekten und Lebewesen mit Radiowellen. Ein RFID-System besteht aus einem Transponder (umgangssprachlich auch Funketikett genannt), der sich am oder im Gegenstand bzw. Lebewesen befindet und einen kennzeichnenden Code enthält, sowie einem Lesegerät zum Auslesen dieser Kennung. Die Kopplung geschieht durch vom Lesegerät erzeugte magnetische Wechselfelder in geringer Reichweite oder durch hochfrequente Radiowellen. Damit werden nicht nur Daten übertragen, sondern auch der Transponder mit Energie versorgt. Zur Erreichung größerer Reichweiten werden aktive Transponder mit eigener Stromversorgung eingesetzt. Das Lesegerät enthält ein Betriebssystem bzw. ein Bedienprogramm, die den eigentlichen Leseprozess steuert, und eine RFID-Middleware mit Schnittstellen zu weiteren EDV-Systemen und Datenbanken.

Die Übertragung der Identinformation erfolgt bei Systemen, die nach ISO 18000-1 ff. genormt sind, folgendermaßen: Das Lesegerät, das je nach Typ ggf. auch Daten schreiben kann, erzeugt ein hochfrequentes elektromagnetisches Wechselfeld, dem der RFID-Transponder ausgesetzt wird. Die von ihm über die Antenne aufgenommene Hochfrequenzenergie dient während des Kommunikationsvorganges als Stromversorgung für seinen Chip. Bei aktiven RFID-Transpondern kann die Energieversorgung auch durch eine eingebaute Batterie erfolgen. Bei halb-aktiven RFID-Transpondern übernimmt die Batterie lediglich die Versorgung des Mikrochips. Der RFID-Transponder kann auch einen Speicher aufweisen, mit dem er kommuniziert.

Der Mikrochip im RFID-Transponder decodiert die vom Lesegerät gesendeten Befehle. Die Antwort codiert und moduliert der RFID-Transponder in das eingestrahlte elektromagnetische Feld durch Feldschwächung im kontaktfreien Kurzschluss oder gegenphasige Reflexion des vom Lesegerät ausgesendeten Feldes. Damit überträgt der Transponder beispielsweise seine eigene unveränderliche Seriennummer, weitere Daten des gekennzeichneten Objekts oder andere vom Lesegerät abgefragte Information. Der Transponder erzeugt selbst also kein Feld, sondern beeinflusst das elektromagnetische Sendefeld der Leseeinheit.

Es gibt bereits Module, die zusätzlich zum NFC/RFID-Transponder und dem Speicher, eine Kommunikationsschnittstelle aufweisen. Der NORDIC SEMICONDUCTOR NRF52 weist beispielsweise zusätzlich zum NFC/RFID-Transponder auch eine Bluetooth Kommunikationsschnittstelle auf. NRF52 unterstützt zudem NFC-A. Die Signalart NFC-A basiert auf ISO/IEC 14443A und ist ähnlich wie RFID Typ A. Bei der Typ-A-basierten Kommunikationsverzögerungskodierung (Miller-Kodierung) wird neben der AM-Modulation auch die Technik der Verzögerung verwendet. Hier werden binäre Daten mit einer Datenrate von ca. 106 Kbps über eine Kommunikation vom Typ A übertragen. Hier muss sich das Binärsignal von 0 % auf 100 % ändern, um zwischen binären 1 und binären 0 Dateninformationen zu unterscheiden.

Die Anmeldedaten umfassen in der Regel mindestens einen Universally Unique Identifier (UUID). Damit kann das Feldgerät im Bedienprogramm eindeutig identifiziert werden. Häufig umfassen die Anmeldedaten zusätzlich noch einen Benutzernamen oder eine begrenzte Anzahl an Benutzernamen und/oder gegebenenfalls ein Passwort. Diese Daten können ausgelesen oder bei einer Anmeldung abgefragt werden.

Aus dem Stand der Technik sind Zugriffsmechanismen, wie bspw. die Eingabe eines Passwortes bzw. Zugangsschlüssels, wohl bekannt. Mit Hilfe dieser Zugriffsmechanismen soll sichergestellt werden, dass nur autorisierte Personen an die Feldgerätedaten, insbesondere Parameter der Feldgeräte kommen, um diese bspw. zu editieren. Dies betrifft sowohl den direkten Zugriff auf ein Feldgerät durch einen Menschen, wie auch den Zugriff über ein Bedienprogramm.

Die Erfindung wird anhand der nachfolgenden Figur näher erläutert. Es zeigt:

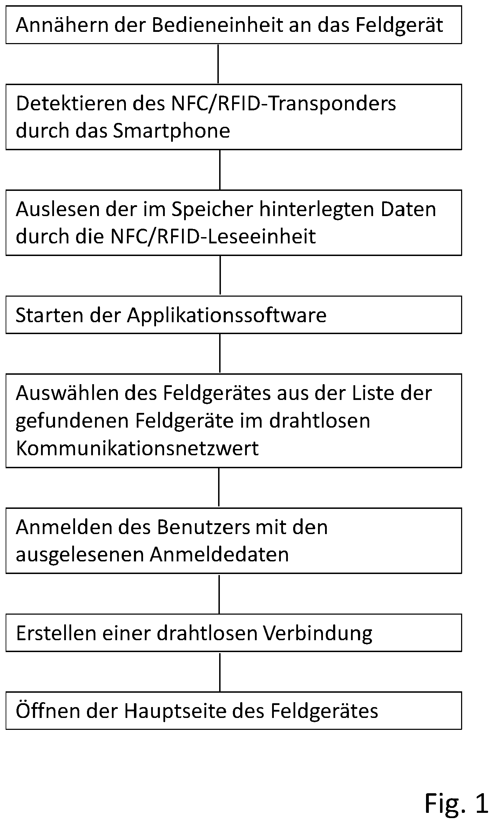

Fig. 1: ein Flussdiagramm einer Ausgestaltung des erfindungsgemäßen Verfahrens zum Bedienen eines Feldgerätes.

Die Fig. 1 zeigt ein Flussdiagramm einer Ausgestaltung des erfindungsgemäßen Verfahrens. Der Bediener nähert seine Bedieneinheit, in dem Falle sein Smartphone an das Feldgerät an (Schritt 1). Befindet sich das Feldgerät in ausreichender Entfernung zum Feldgerät, so dass der im Feldgerät verbaute NFC/RFID-Transponder vom Smartphone detektiert wird (Schritt 2), so wird gleichzeitig von der NFC/RFID-Leseeinheit die im Speicher hinterlegten Daten ausgelesen (Schritt 3). Das Betriebssystem interpretiert die gelesenen Daten und führt sie aus, was ein Starten des Bedienprogrammes, in dem Fall die Applikationssoftware triggert (Schritt 4). Die eingelesenen Daten umfassen zusätzlich eine UUID und Anmeldeinformationen bzw. Anmeldedaten. Mit diesen Informationen wird das Feldgerät im Kommunikationsnetzwerk ausgesucht (Schritt 5) und die Bedieneinheit angemeldet (Schritt 6). Eine drahtlose Verbindung wird bei erfolgreicher Anmeldung erstellt (Schritt 7). Die Applikationssoftware wechselt bei erfolgreicher Verbindung zur Hauptseite des Feldgerätes (Schritt 8). Alle diese Schritte mussten früher vom Bediener ausgeführt werden. Erfindungsgemäß wird das Ausführen der einzelnen Schritte durch die im Feldgeräte hinterlegten Daten getriggert bzw. initiiert.

## Patentansprüche

1. Verfahren zum Bedienen eines Feldgerätes der Prozessautomatisierungstechnik,
wobei das Feldgerät einen NFC/RFID-Transponder aufweist,
wobei eine Bedieneinheit ein Betriebssystem umfasst, welches ein ausführbares Bedienprogramm aufweist,
wobei die Bedieneinheit eine NFC/RFID-Leseeinheit aufweist, **gekennzeichnet durch** die folgenden Merkmale:
wobei der NFC/RFID-Transponder einen Speicher umfasst, der Daten aufweist, welche bei einem Auslesen mit der NFC/RFID-Leseeinheit und Interpretieren durch das Betriebssystem ein Aufrufen des Bedienprogrammes in der Bedieneinheit triggern,
wobei das Feldgerät eine erste Kommunikationsschnittstelle zur Verbindung des Feldgerätes mit einem drahtlosen Kommunikationsnetzwerk aufweist,
wobei die Bedieneinheit eine zweite Kommunikationsschnittstelle zur Verbindung der Bedieneinheit mit einem drahtlosen Kommunikationsnetzwerk aufweist, welches für das Bedienprogramm zugreifbar ist,
wobei die Daten eine drahtlose Verbindung zwischen dem Feldgerät und der Bedieneinheit über das Bedienprogramm triggern,
wobei für die drahtlose Verbindung zwischen dem Feldgerät und der Bedieneinheit und für eine Autorisierung auf dem Feldgerät Anmeldedaten notwendig sind,
wobei die Anmeldedaten im Speicher des NFC/RFID-Transponders hinterlegt sind und mit der NFC/RFID-Leseeinheit ausgelesen werden.
wobei nach jeder Verbindung neue Anmeldedaten durch das Bedienprogramm erstellt werden,
wobei die neuen Anmeldedaten dem NFC/RFID-Transponder mittels einer NFC/RFID-Schreibeinheit übermittelt werden,
wobei die im Speicher bereits hinterlegten Anmeldedaten durch die neuen Anmeldedaten ersetzt werden.

2. Verfahren nach Anspruch 1,
wobei die Anmeldedaten eine erste Verschlüsselung aufweisen,
wobei die Anmeldedaten mittels des Bedienprogrammes entschlüsselt werden.

3. Verfahren nach Anspruch 2,
wobei die Anmeldedaten mittels des Bedienprogrammes verschlüsselt werden, so dass die verschlüsselten Anmeldedaten eine zweite Verschlüsselung aufweisen, die die erste Verschlüsselung ersetzt,
wobei die Anmeldedaten mit der zweiten Verschlüsselung dem NFC/RFID-Transponder mittels einer NFC/RFID-Schreibeinheit übermittelt und dort hinterlegt werden.

4. Verfahren nach einem der vorherigen Ansprüche,
wobei die Daten im Falle einer deaktivierten zweiten Kommunikationsschnittstelle, ein Aktivieren der zweiten Kommunikationsschnittstelle über das Betriebssystem triggern.

5. Verfahren nach einem der vorherigen Ansprüche,
wobei im Falle einer deaktivierten ersten Kommunikationsschnittstelle beim Auslesen der Daten mit der NFC/RFID-Leseeinheit, die Bedieneinheit ein Aktivieren der ersten Kommunikationsschnittstelle des Feldgerätes triggern.

## Claims

1. Method for operating a field device in process automation technology,
whereby the field device has an NFC/RFID transponder,
wherein an operating unit comprises an operating system which has an executable operating program,
whereby the operating unit has an NFC/RFID reader,
wherein the NFC/RFID transponder comprises a memory which has data which, when read by the NFC/RFID reader and interpreted by the operating system, triggers a call of the operating program in the operating unit,
wherein the field device has a first communication interface for connecting the field device to a wireless communication network,
wherein the operating unit has a second communication interface for connecting the operating unit to a wireless communication network which can be accessed by the operating program,
whereby the data triggers a wireless connection between the field device and the operating unit via the operating program,
whereby login data is required for the wireless connection between the field device and the operating unit and for authorization on the field device ,
where the logon data is stored in the NFC/RFID transponder and is read by the NFC/RFID reader.
whereby new login data is created by the operating program after each connection,
whereby the new credentials are transmitted to the NFC/RFID transponder by means of an NFC/RFID writing unit,
whereby the login data already stored in the memory is replaced by the new login data.

2. Method according to claim 1,
whereby the login data has an initial encryption,
whereby the login data is decrypted using the operating program.

3. Method according to claim 2,
whereby the login data is encrypted by means of the operating program, so that the encrypted login data has a second encryption that replaces the first encryption,
whereby the login data with the second encryption is transmitted to the NFC/RFID transponder by means of an NFC/RFID writing unit and stored there.

4. Method according to any one of the preceding claims,
whereby, if the second communication interface is deactivated, the data triggers activation of the second communication interface via the operating system.

5. Method according to any one of the preceding claims,
whereby in the event of a deactivated first communication interface when reading out the data with the NFC/RFID reader, the operating unit triggers activation of the first communication interface of the field device.

## Revendications

1. Procédé de commande d'un appareil de terrain de la technique d'automatisation des processus,
dans lequel l'appareil de terrain comprend un transpondeur NFC/RFID,
dans lequel une unité de commande comprend un système d'exploitation qui présente un programme de commande exécutable,
dans lequel l'unité de commande comprend une unité de lecture NFC/RFID,
dans lequel le transpondeur NFC/RFID comprend une mémoire qui présente des données qui, lors d'une lecture avec l'unité de lecture NFC/RFID et d'une interprétation par le système d'exploitation, déclenchent un appel du programme de commande dans l'unité de commande,
dans lequel le dispositif de terrain comprend une première interface de communication pour connecter le dispositif de terrain à un réseau de communication sans fil,
dans lequel l'unité de commande comprend une seconde interface de communication pour connecter l'unité de commande à un réseau de communication sans fil qui est accessible au programme de commande,
les données déclenchant une connexion sans fil entre l'appareil de terrain et l'unité de commande via le programme de commande,
des données de connexion étant nécessaires pour la liaison sans fil entre l'appareil de terrain et l'unité de commande et pour une autorisation sur l'appareil de terrain ,
les données d'inscription étant déposées dans le transpondeur NFC/RFID et étant lues par l'unité de lecture NFC/RFID.
de nouvelles données de connexion étant créées par le programme de commande après chaque connexion,
dans lequel les nouvelles données d'inscription sont transmises au transpondeur NFC/RFID au moyen d'une unité d'écriture NFC/RFID,
les données de connexion déjà enregistrées dans la mémoire étant remplacées par les nouvelles données de connexion.

2. Procédé selon la revendication 1,
les données de connexion présentant un premier cryptage,
les données de connexion étant décryptées au moyen du programme d'utilisation.

3. Procédé selon la revendication 2,
dans lequel les données de connexion sont cryptées au moyen du programme d'utilisation, de sorte que les données de connexion cryptées présentent un deuxième cryptage qui remplace le premier cryptage,
les données d'inscription étant transmises avec le deuxième cryptage au transpondeur NFC/RFID au moyen d'une unité d'écriture NFC/RFID et y étant déposées.

4. Procédé selon l'une quelconque des revendications précédentes,
dans lequel, dans le cas d'une deuxième interface de communication désactivée,
les données déclenchent une activation de la deuxième interface de communication via le système d'exploitation.

5. Procédé selon l'une quelconque des revendications précédentes,
dans lequel, dans le cas où la première interface de communication est désactivée lors de la lecture des données avec l'unité de lecture NFC/RFID, l'unité de commande déclenche une activation de la première interface de communication de l'appareil de terrain.
